(19) Europäisches Patentamt / European Patent Office / Office européen des brevets

(11) **EP 1 182 602 B1**

(12) **EUROPEAN PATENT SPECIFICATION**

(45) Date of publication and mention
of the grant of the patent:
**25.04.2007 Bulletin 2007/17**

(51) Int Cl.:
*G06T 7/00* *(2006.01)*    *G06F 19/00* *(2006.01)*

(21) Application number: **00830588.0**

(22) Date of filing: **25.08.2000**

(54) **A system for the automatic analysis of DNA microarray images**

Ein System zur automatischen Bildanalyse von DNA Mikroarrays

Système d'analyse automatique d'images de microéchatillons d'ADN

(84) Designated Contracting States:
**DE FR GB IT**

(43) Date of publication of application:
**27.02.2002 Bulletin 2002/09**

(73) Proprietor: **STMicroelectronics S.r.l.**
**20041 Agrate Brianza (Milano) (IT)**

(72) Inventors:
• **Arena, Paolo,**
**Uni. d. Studi di Catania-I.F.-Dees**
**95125 Catania (IT)**
• **Fortuna, Luigi**
**96100 Siracusa (IT)**
• **Lavorgna, Mario**
**80070 Bacoli (Napoli) (IT)**
• **Occhipinti, Luigi**
**97100 Ragusa (IT)**

(74) Representative: **Notaro, Giancarlo et al**
**c/o Buzzi, Notaro & Antonielli d'Oulx**
**Via Maria Vittoria 18**
**10123 Torino (IT)**

(56) References cited:
**US-A- 5 140 670**

• **ROSKA T AND A RODRÍGUEZ-VÁZQUEZ: "Review of CMOS Implementations of the CNN Universal Machine-Type Visual Microprocessors" IEEE INTERNATIONAL SYMPOSIUM ON CIRCUITS AND SYSTEMS, 28 - 31 May 2000, pages II-120-II-123, XP002159318 Geneva**
• **DERISI J ET AL: "USE OF A CDNA MICROARRAY TO ANALYSE GENE EXPRESSION PATTERNS IN HUMAN CANCER" NATURE GENETICS,NEW YORK, NY,US, vol. 11, 11 December 1996 (1996-12-11), pages 457-460, XP000971491 ISSN: 1061-4036**
• **CHUA L O AND L YANG: "Cellular Neural Networks: Applications" IEEE TRANSACTIONS ON CIRCUITS AND SYSTEMS, vol. 35, no. 10, October 1988 (1988-10), pages 1273-1290, XP002159319**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 182 602 B1

## Description

<u>Field of the invention</u>

This invention relates to the sector of analysis of images and was developed with special reference to the possible application to DNA analysis, especially in view of the automatic analysis of the images generated by means of a so-called DNA microarray or DNA chip.

The automatic analysis of DNA is mainly based on the examination of the messenger RNA which controls the way in which the various parts of the genes are activated or deactivated to create certain types of cells.

If the gene is expressed in a single way, it can generate a normal muscular cell, while if it is expressed in another way it can generate a tumour.

By comparing the different expressions of genes, researchers aim at discovering the way to predict and prevent cancer.

Another possible application is the so-called pharmacogenomics, a discipline in which scientists attempt to correlate the smallest DNA variations of a person with reaction to various substances, such as drugs.

Numerous other possible applications are being implemented, developed and studied.

## Description of the prior art

Over the past years, a technique based on the use of so-called DNA chips has been developed to allow automatic DNA analysis.

Essentially, DNA chips are small flat surfaces on which some rows, called probes, of one half of the double helix of DNA, are deposited according to a typical matrix configuration.

Since each half of the double helix of DNA is naturally bonded to its complementary other half in a process called hybridisation, the DNA chip can be used to identify the presence of particular genes in a biological specimen.

These chips are called microarrays in relation to their matrix structure, which may also be linear, and can be made employing different technologies, including semiconductor technology, on a variety of surfaces, including glass and plastic.

The use of DNA microarrays to delineate the expression of genes is the most important application of "biochips". This method has completely replaced the previous methods which had the disadvantage of needing to be repeated either on each gene or on a restricted number of genes and were also difficult to automate.

For a general illustration of a possible application of these methods, useful reference can be made to the work by DeRisi J et. al., "Use of cDNA microarray to analyse gene expression patterns in human cancer", NatGenet 1996 Dec; 14 (4), 457-60.

Usually, DNA microarrays are used as interconnected memory chips in order to compare specimens of DNA from a patient against known, preserved specimens of DNA.

This is because DNA carries an electrical charge and this charge can be read on a chip, exactly in the way that occurs in a cell in a matrix of memory cells.

In many DNA chips, the coupling of arrays of DNA is signalled by means of fluorescent materials. Notwithstanding, the procedure for analysing the chip, in particular to detect the levels of fluorescence, is rather costly.

Various methods have been developed to avoid these problems.

For example, according to a known solution, developed by the company Micro Sensors in collaboration with the company Motorola, DNA probe coupling is detected by means of bio-electronic methods.

This solution essentially consists in depositing a number from 10 to 50 DNA probes on a printed circuit. An organic atom containing iron which can generate an electronic signal when the DNA rows are coupled, is used instead of fluorescence.

Parallel methods, allowing the simultaneous quantification of the level of expression of a very high number of genes by means of simultaneous querying, with a high sensitivity and fidelity of acknowledgement of the expression profile of a complete library of genes, have been developed over the past years.

With a certain degree of approximation, yet essentially close to reality, the methods based on the use of microarrays of genes can be ideally related to some main classes.

The method developed by Prof. Brown represents a first class of solutions. This method permits, by means of robot micro-machining, to chemically immobilise in 2 by 2 cm micro-grids fragments of cDNA (complementary DNA), or DNA reconstructed on the basis of RNA by reverse transcription. In this way, microarrays containing 10,000 individual cDNA elements are formed. The DNA fragment to be analysed is marked with fluorescent groups so to obtain different types of sensors to immediately distinguish the fragments of DNA by means of the colour of the corresponding fluorescent group with which they are treated. In this way, the microarray can be analysed simultaneously during the hybridisation phase. The micro-grid is read by means of a confocal microscope at the end of the hybridisation phase providing a two-dimensional image in which coloured pins, or spots, appear arranged in a grid. The intensity of the various colours and their combinations is directly correlated to the intensity of the light output by fluorescence by the respective probes and to the degree of affinity between the probes and the individual genes deposited on the grid.

Another technique is known as micro-spotting. In this technique, a robot arm is dipped in a DNA material in correspondence with an array of pins which is then impressed on a glass support.

Another method based on the use of microarrays was introduced by Affymatrix. This technique employs synthetic oligonucleotides, instead of natural fragments of DNA for constructing the micro-grid. These fragments are deposited on the grid by means of photolithography. In particular, masks for exposing some parts of a glass wafer on which certain chemical processes occur are used to make single row DNA sensors.

The use of photolithography, in combination with the chemical synthesis of oligonucleotides, results in a presence of approximately 100,000 genes in a single microarray which, according to current estimates, compose the complete library of mapped human characteristics.

The methods described provide as a final result an image which expresses the degree of genic expression in a fragment of DNA to be analysed by means of shades of different colours or combinations of colours.

The main advantage of the microarray method consists in the possibility of simultaneously analysing an extremely high number of genes.

This is because the information associated with the different cells present on the DNA chip can be processed in parallel with the consequent possibility of increasing the number of cells in the microarray to values in the order of 10,000 - 100,000 cells.

In this way, systems for the automated analysis of fragments of DNA can be provided which employ processing techniques of the images derived from microarray after hybridisation.

This notwithstanding, the systems of this type implemented to date are based on the analysis of very large images (a number of pixels which is one to two orders of magnitude greater than the number of cells which form the micro-grid). These images can be acquired in parallel, but are transferred and processed in a sequential fashion, as usually occurs in analysis techniques employing digital microprocessors, whereby processing speed is considerably penalised.

Consequently, the idea of using a DNA chip has not been fully exploited to date, due to the difficulty in achieving real time analysis of the respective fluorescent images. Moreover, since diagnostic protocols generally require a certain number of microarray-based experiments, the time required for analysing the resulting images (processing times in the range of 10 to 30 minutes) abnormally hinder the efficacy of such method.

### Object and summary of the invention

The need therefore exists to provide an alternative system able to process images in real time, such as the images generated by a microarray of the type described. The object of this invention is to provide a system which allows efficient, rapid automatic analysis of images, such as the images generated by a DNA chip after hybridisation, to identify the affinities between the analysed specimen and the fragments of DNA on the DNA chip.

According to this invention, this object is attained thanks to a system having the characteristics which are specifically called for in the claims which follow.

In essence, according to the currently preferred embodiment, the invention provides for making a system which allows to automatically analyse the images from a DNA chip after hybridisation. This is attained by acquiring the images by means of optical matrix sensors and by processing the acquired images by means of a Cellular Neural Network (abbreviated to CNN). Such a processing is essentially analogue and is achieved spatially on the entire development of the microarray matrix.

For a general illustration of the characteristics of a cellular neural network, useful reference can be made to document US-A-5 140 670.

According to the currently preferred embodiment of the invention, images are analysed by means of a computing process which accounts for the physical-chemical rules at the basis of reactions on the microarray.

In a particularly advantageous way, the cellular neural network architecture comprises a matrix of cells which are locally interconnected by means of synaptic connections, the matrix presenting a spatial distribution which is essentially correlated to the matrix form of the processed images.

A system according to the invention can be easily made according to a system-on-a-chip configuration, in which the entire acquisition and processing system of the images is integrated on a single chip, for example implementing VLSI CMOS technologies. Reference to this matter can be found in the work by Rodriguez-Vasquez A. et al., "Review of CMOS Implementations of the CNN Universal Machine-Type Visual Microprocessors" published in Proceedings of ISCAS 2000 (IEEE Int. Symposium on Circuits and Systems), Geneva, May 28-31, 2000.

More in particular, this invention relates to a system integrated in a monolithic fashion on a semiconductor for automatically analysing images, such as images from a microarray of the type comprising optical matrix sensors for the acquisition of images and to a high computing power parallel analogue processing architecture, based on the implementation of cellular neural network. Moreover, the invention allows to integrate the entire image acquisition and processing system on a single chip.

Characteristics and advantages of this invention will be illustrated with reference to a preferred embodiment, as non-limiting examples, in the enclosed drawings.

## Brief description of the drawings

In the enclosed drawings which are attached to this description:

- figure 1 illustrates a basic diagram of the embodiment of a system for automatically analysing images from a DNA chip after hybridisation;
- figures from 2 to 5 illustrate, both in the form of block diagrams and in the form of charts, the criteria on which the organisation and operation of the cellular neural network are based;
- figure 6 illustrates an example of image from a DNA chip after hybridisation and splitting thereof into three chromatic components;
- figure 7 illustrates a flow chart which outlines the method whereby a cellular neural network image processing sequence is applied to each chromatic component of an image read from a DNA chip;
- figure 8 (which is split into two parts, identified by 8a and 8b, respectively) and figures from 9 to 12 illustrate, for example, the method according to which the various operations concerning filtering, segmenting, and the morphological operations, which can be implemented in a system according to this invention, can be conducted to isolate useful information with respect to the various sources of noise which could lead to false interpretations of the results during the automatic microarray image analysis process.

## Detailed description of a preferred of embodiment of the invention

As mentioned above, the solution according to this invention offers an advantageous alternative with respect to traditional methods based on the analysis of fluorescence images generated by means of a DNA chip.

In particular, the solution according to this invention utilises the class of arrays (generally two-dimensional) of analogue processors known as cellular neural networks (CNN) and implements a system which is able to process such images in real time.

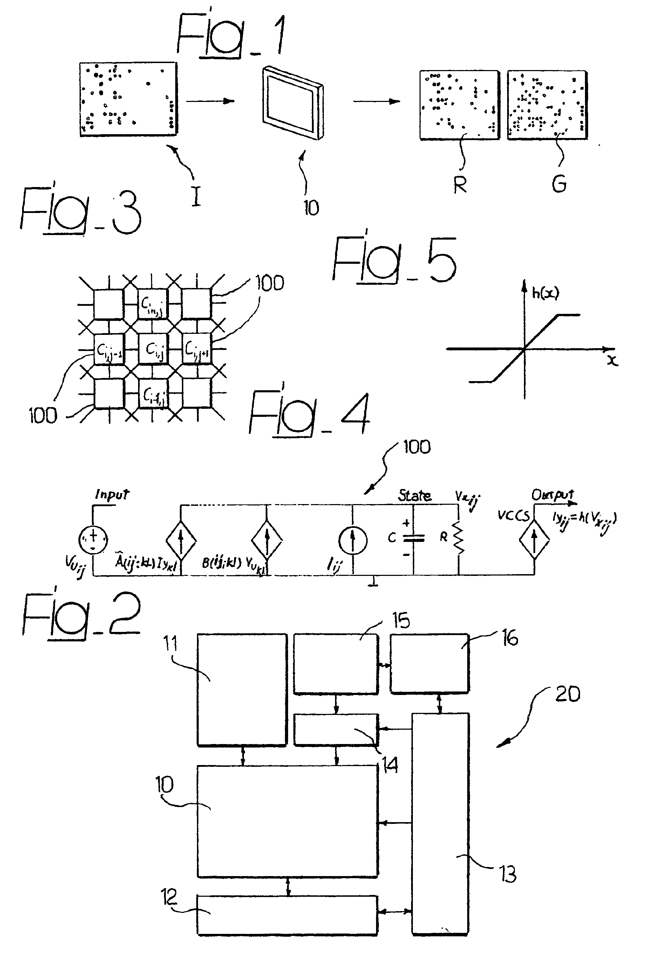

Reference I in figure 1 indicates an image, for example in the form of a square matrix of spots on a DNA chip (of the known type and, consequently, not illustrated in the figures).

The image is "read", preserving the matrix organisation, by an optical sensor made, for example, employing CMOS technology and associated with a processing system of the type shown in figure 2 and indicated in general by number 20.

As further illustrated hereof, the system 20 can be configured as a cellular neural network (CNN) processing system, i.e. as an analogue, parallel processing system, preferably integrated in the same chip housing the block 10 in which the optical sensor is integrated.

In particular (again with reference to the block diagram in figure 2), in addition to the array of analogue cells with optical sensors forming the block 10 in which the optical sensor is integrated, the system preferably comprises a set of analogue memories 11 which can co-operate with sensor 10, according to the criteria which are further described below, as well as an input/output circuit 12, which type is generally known.

The operation of components 10 and 12 described above is achieved under the supervision of a control logic 13.

Preferably, the control logic 13 directly acts on the circuit 12. The same control logic 13 is usually configured so to directly operate on the array 10 by means of an analogue/digital converter 14 to which the instructions contained in a program memory 16 selectively flow via a set of digital registers 15 for the configuration of the cellular neural network.

According to another important characteristic of the invention, the system 20 is configured as a cellular neural network which avoids the need to implement analogue/digital conversion and/or vice versa of the values of each element or pixel in the image acquired at output of the optical sensor 10, also allowing to implement the microarray image analysis algorithm according to a totally parallel processing criterion.

The various operations forming the algorithm are achieved by suitably setting the parameters which are programmed in the configuration registers 15 of the neural network on a case-by-case basis.

In this way, an algorithm strictly speaking is created, being the sequence of elementary operations performed on the colour image, i.e. on its chromatic elements, composed preferably by the red component R and the green component G only, i.e. with the exclusion of the blue component B, as shown in figure 1.

Figures from 3 to 5 illustrate the principle implementing the model of a cellular neural network as the array of cells 100. The cells are reciprocally identical and only locally interconnected by means of weighed synaptic connections.

The circuit model of each cell 100 is shown in the diagram in figure 4, which schematically illustrates the values included in matrixes A and B and in the bias coefficient I. Said values allow to generate, from a input signal, a corresponding output value which is weighed by means of function h(x) illustrated in figure 5.

This all corresponds to known criteria which consequently do not need to be additionally illustrated herein.

Returning to the block diagram in figure 2, the block 10 essentially consists of a matrix of analogue cells whose inputs are the signals corresponding to the optical sensors which read the image I generated in the microarray.

The analogue memory 11 is used to store the images and the intermediate processing stages. Conversely, the instructions and the respective parameters are stored in digital form in the memory 16 and in the registers 15 and are applied to the block 10 by means of the converter 14. The control logic 13 synchronises the image acquisition and processing operations, in addition to the I/O signals to the end user which pass through the block 12.

According to Chua and Yang, the model equations of a cellular neural network are:

$$RCdx_{ij}/dt = -x_{ij} + \Sigma A(l,m).y_{lm} + \Sigma B(l,m).u_{lm} + I_{bias}$$

where the sums extend to all values (l,m) belonging to the cells of the neighbourhood N(Cij) of the cell concerned Cij and

$$y_{ij} = -1 \quad \text{if } x_{ij} < x_{low}$$
$$1 \quad \text{if } x_{ij} > x_{high}$$
$$x_{ij} \quad \text{in other cases}$$

A possible differentiation of the model, known under the name of FSR range (Full State Range) model, is related to circuit simplification when implementing the circuit with VLSI CMOS technology:

$$\tau dx_{ij}/dt = -g(x_{ij}) + \Sigma A(l,m).y_{lm} + \Sigma B(l,m).u_{lm} + I_{bias}$$

where, also in this case, the sums extend to all values (1,m) belonging to N (Cij) and

$$g(x_{ij}) = x_{low} \quad \text{if } x_{ij} < x_{low}$$
$$x_{high} \quad \text{if } x_{ij} > x_{high}$$
$$0 \quad \text{in other cases}$$

Obviously, the algorithms to be implemented depend on the type of analysis required by the expert. However, important steps, such as the reduction of the components, noise clearing, or the elimination of deformed spots, will need to be performed in any case.

The example shows an algorithm which extracts from an image resulting from two red and green fluorescence probes the spots related to three different levels of each colour indicating the three different degrees of affinity between the probes and the genes present in the micro-grid.

Figure 6 illustrates an example of image I from a DNA chip after hybridisation. For classification of affinities, analysing the two chromatic components R (red) and G (green) only will usually suffice. This is because there are no reactions able to generate appreciable levels of the component B (blue), i.e. the third component of the known RGB (Red Green Blue) colour model.

This implies firstly a possible hardware simplification of the image acquisition part, i.e. of the optical sensor comprised in the block 10.

As mentioned, optical sensors are used for reading DNA chip images (for example CMOS). The optical sensors can be either black and white sensors or Bayes four-section RGGB sensors. The resulting image is converted, after digitalisation, into an RGB, YUV image, etc., according to the type of processing and the reference application.

In the solution according to this invention, this form of pre-processing can be eliminated and simple two-colour sensors, instead of Bayes sensors, can be used as sensors which are selectively sensitive to distinct chromatic components.

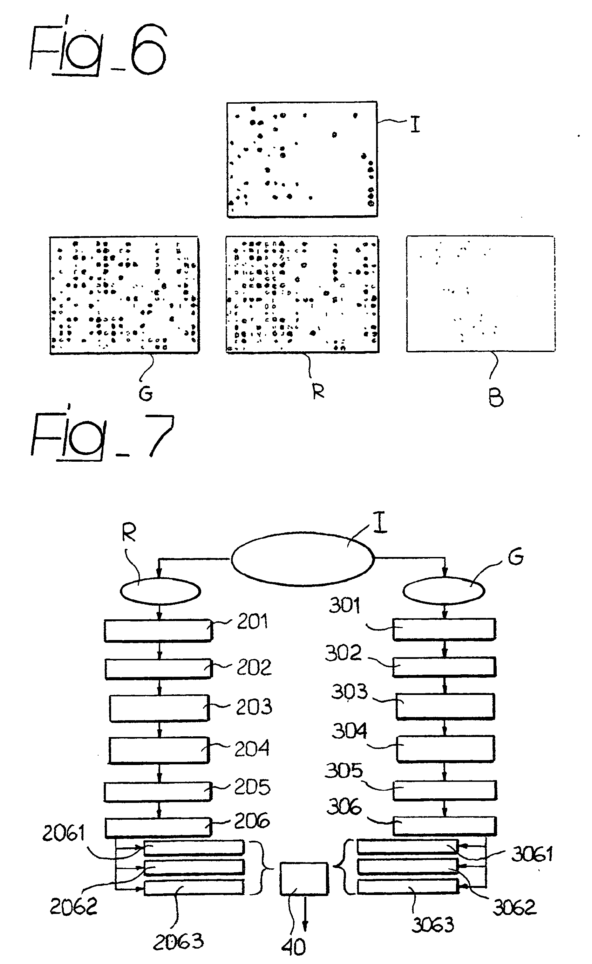

Furthermore, no digitalisation operation is required, since a typically analogue treatment is implemented. Consequently, applying an image processing sequence with cellular neural networks based on templates, for example according to the process outlined in the flow chart in figure 7, for each of the chromatic components (R and G) processed, will suffice.

The reader will certainly appreciate that the sequence of processing operations illustrated herein is adapted to be implemented fully in parallel, i.e. simultaneously (with a consequent reduction of total processing times) on the two chromatic components R and G. These latter are derived from the source image I in a known way, for example by filtering or by exploiting the availability of optical sensors with chromatically selective characteristics.

In essence, according to the currently preferred embodiment of this invention, the processing sequence comprises:

1. a background clearing operation, implemented in steps indicated by the numbers 201 and 301;
2. a grid analysis operation, implemented in steps indicated by the numbers 202 and 302;
3. an operation for eliminating the smaller irregular spots, implemented in steps indicated by the numbers 203 and 303;
4. an operation for eliminating the larger spots, implemented in steps indicated by the numbers 204 and 304;
5. an intensity analysis operation, implemented in steps indicated by the numbers 205 and 305;
6. a thresholding operation, for example on three levels, implemented in steps indicated by the numbers 206 and 306 and finally
7. a result combination operation in relation to the two analysed chromatic components implemented, for example, by means of a logical product (AND) in a final step indicated by the number 40.

The three levels (high, medium and low) according to which the threshold definition operation indicated by blocks 206 and 306 is carried out are respectively indicated by the numbers 2061, 2062 and 2063 (red component R) and by the numbers 3061, 3062 and 3063 (green component G).

All the operations above, including the final logic AND operation, are carried out within the cellular neural network by means of templates, i.e. by means of suitable sets of parameters which are programmed in the network configuration registers (indicated by number 15 in the diagram in figure 2) on a case-by-case basis.

The sequence of operations gives rise to a set of intermediate results corresponding to images which can be stored in the analogue memory of the system, indicated by number 11 in figure 2.

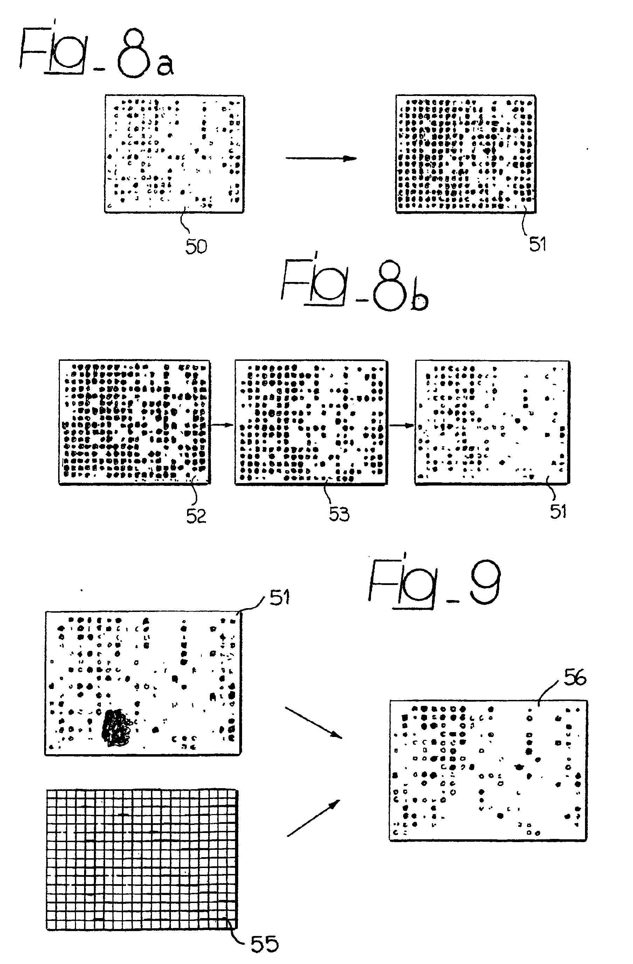

Figures 8 and 12 indicate, for example, the intermediate results corresponding to the main operations where certain specific operations involving filtering and segmenting and morphological operations are required in order to isolate the sources of noise which could lead to false interpretations of results during automatic analysis of the image I obtained from the microarray.

More in detail, figure 8, which is split into two parts, identified by 8a and 8b, respectively, refers to the background clearing operation (steps 201 and 301 in the chart in figure 7).

In a first solution, illustrated in figure 8a, the source image to be processed, indicated by number 50, consisting of a set of spots, is subjected to thresholding operation with respect to a fixed value (for example a threshold equal to 0.85 of the maximum normalised intensity value of the image) to obtain the resulting image 51.

In the variant illustrated in figure 8b, the same result is attained by diffusion filtering, shown by number 52, based on the implementation of templates which put the spot contours out of focus. An averaging operation, shown by number 53, is carried out on the image thus obtained to form the resulting image, which also in this case is indicated by the number 51.

In the case in which the image processed (here supposed to coincide with the image 51 seen above, which is not imperative) is "dirty", for example, as shown in figure 9, for the presence of a dot which does allow to identify the spots, an additional template or grid 55 is used. Its function is to filter out the noise and eliminate the spots which overlap the contours of the grid 55. The resulting image is indicated by the number 56.

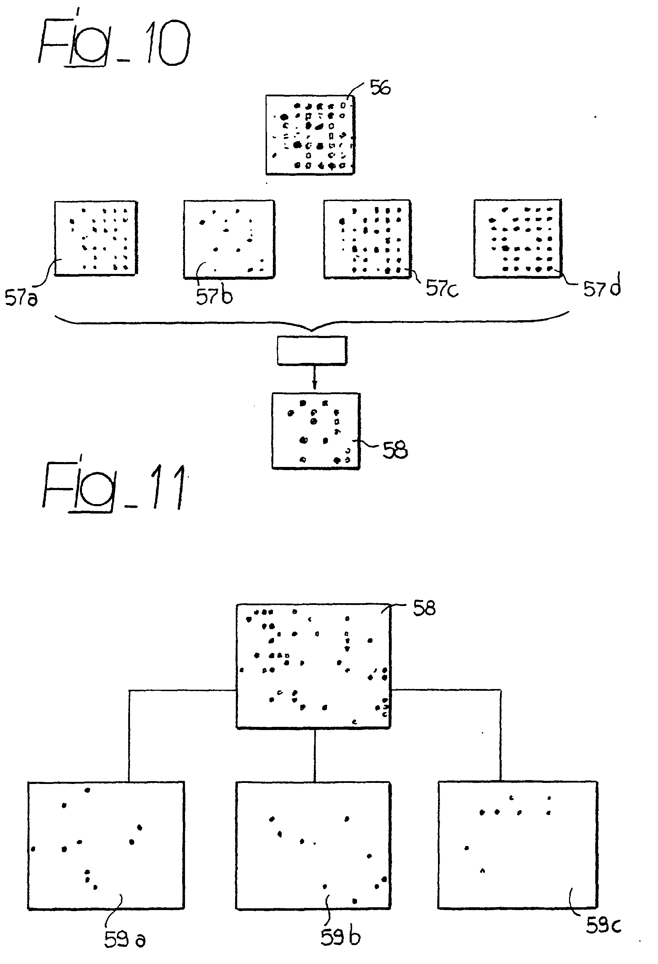

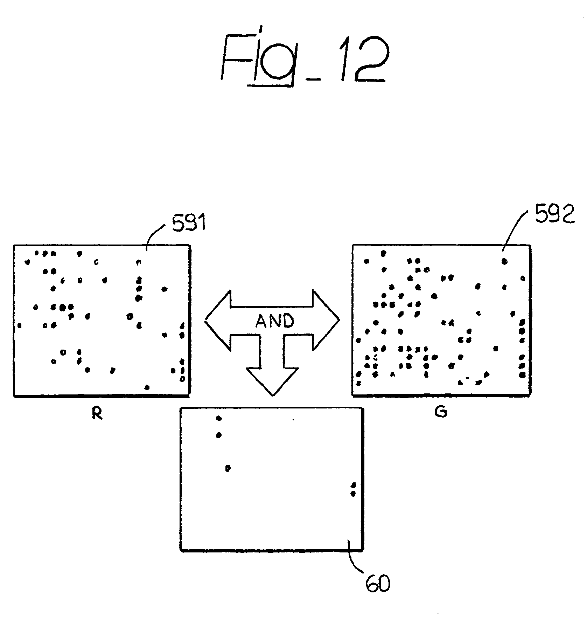

Figure 10 and 11 illustrate the processing sequence attained by means of two other templates.

In particular, figure 10 illustrates the application to a source image (here supposed to coincide with image 56, which again is not imperative) of an erosion template which can erode the spots of said image on the right-hand side 57a, on the left-hand side 57b, in the horizontal direction 57c and in the vertical direction 57d.

In this way, the shape of the spots is analysed to eliminate the irregularities of the spots by selecting only the largest circular spots.

Figure 11, on the other hand, illustrates the sequence to implement direct intensity analysis to provide a classification of the spots in the source image (supposed to coincide with image 58 obtained above, which again is not imperative) on the basis of intensity. This occurs according to three threshold levels (for example equal to -0.5; 0 and +0.5; said threshold levels being referred to the maximum normalised intensity.

The overall result which can be obtained is the generation of three images deriving from the threshold definition (and, consequently, of an essentially binary content, i.e. "dark" or "light" for each spot) indicated by the numbers 59a, 59b and 59c respectively, which can be used for the logic product operation (AND), indicated by block 40 in figure 7.

This operation is schematically illustrated in figure 12. Here, references 591 and 592 indicate, in general, two threshold images which are obtained respectively for the red component R and for the green component G, combined by means of the logic product (AND), to generate a final image 60 which can be made available to an end user in the form of a display (on screen and/or hard copy) driven by unit 12 in figure 2.

The computing time requirements for each of the operations listed above shows a computing capacity which is much higher than the normal image processing techniques based on digital computer platforms. For example, by employing the chip time constant $t_{CNN}$ as a unit of time (which is typically in the order of 250 nanoseconds), each of the various template implementation operations described above require typically from 3 to 6 of said units of time, which values which fall to one only of said unit in the case of simple logic operators and slightly higher times (for example, 10 $t_{CNN}$ units) in the case of recall operations.

In particular, the entire algorithm described above can be run in approximately 275 microseconds, i.e. in less than 1 millisecond.

Various main advantages derive from the implementation of the solution according to this invention.

Firstly, DNA can be analysed automatically and, consequently, objectively. This contrasts with a subjective analysis carried out by human operator employing normal digital image processing tools.

The second advantage is the high processing speed which allows to process images which can also be large directly on-chip with very short processing times. Such times depend only on the value of the time constant RC of the cells in the cellular neural network and the acquisition time of the optical sensors because no analogue/digital conversion (and/or vice versa) is required for the values of each pixel of the image acquired at optical sensor output with respect to the processing matrix operating in parallel with implements the analysis algorithm of the microarray image.

Finally, the system can easily be reprogrammed by means of a restricted number of coefficients which define the templates in the cellular neural network, corresponding to the single operations stored in the internal system memory in correspondence to values of the synaptic bindings of the adjacent cells.

Naturally, numerous changes can be implemented to the construction and embodiments of the invention herein envisaged, all comprised within the context of the concept characterising this invention, as defined by the following claims.

**Claims**

1. System adapted to perform automatic analysis of images (I) of DNA microarrays after hybridisation, said images (I) comprising a matrix of points or spots, the system being adapted to be associated with a sensor (10) for acquiring said images (I) and comprising a circuit (20) for processing the signals corresponding to said images (I) generated by said sensor (10), **characterised in that** said processing circuit (20) is configured according to a cellular neural network (CNN) architecture for the parallel analogue processing of said image signals.

2. System according to claim 1, **characterised in that** said sensor (10) is configured to acquire, as said images (I), fluorescence images from DNA microarrays.

3. System according to any of claims 1 or 2, **characterised in that** said cellular neural network architecture comprises matrix of cells (100) locally interconnected by means of synaptic connections, said matrix presenting a spatial distribution which is essentially correlated to the matrix form of said images (I).

4. System according to claim 1, **characterised in that** said sensor (10) is a matrix optical sensor.

5. System according to any of claims 1 or 4, **characterised in that** said sensor (10) is a colour optical sensor.

6. System according to any of claims 1, 4 or 5, **characterised in that** said sensor (10) is an optical sensor which is selectively sensitive to distinct chromatic components (R, G, B) of said images (I).

7. System according to claim 6, **characterised in that** said processing circuit (20) is configured to process signals corresponding only to some (R, G) of said distinct chromatic components (R, G, B) of said images (I).

8. System according to claim 7, **characterised in that** said processing circuit (20) is configured to process signals associated only to distinct chromatic components (R, G) of said images (I) with the exclusion of the blue chromatic component (B).

9. System according to any of claims 6 to 8, **characterised in that** said processing circuit (20) is configured for processing the signals corresponding to said distinct chromatic components (R, G) of said images (I) in parallel.

10. System according to any of the preceding claims, **characterised in that** said sensor (10) and said processing circuit (20) are integrated in a single chip.

11. System according to any of claims 1 or 10, **characterised in that** said sensor (10) and/or said processing circuit (20) implement VLSI CMOS technologies.

12. System according to any of the preceding claims, **characterised in that** said processing circuit (20) is configured to perform on said signals corresponding to said images (I) at least one of the operations selected from the group consisting of:

    - background clearing (201, 301) of said images (I),
    - grid analysis (202, 302) of said images (I),
    - elimination of smaller irregular spots (203, 303)
    - elimination of the larger spots (204, 304)
    - intensity analysis (205, 305) and
    - threshold definition (206, 306).

13. System according to any of claims 6 to 9, **characterised in that** said processing circuit (20) is configured to combine the processing results (591, 592) obtained in relation to distinct chromatic components (R, G) of said images.

14. System according to claim 13, **characterised in that** said combination operation is a logic product (AND - 40).

15. System according to any of the preceding claims, **characterised in that** said processing circuit (20) comprises:

    - at least one analogue memory (11) for storing signals corresponding to said images (I) and
    - a control logic (13) for running real time processing sequences of said images.

16. System according to claim 15, **characterised in that** said images and the intermediate processing stages are stored by at least one analogue memory (11).

17. System according to any of claims 15 or 16, **characterised in that** said processing circuit (20) comprises means (15) for storing the configuration parameters of said cellular neural network.

18. System according to claim 17, **characterised in that** said configuration parameters are stored in digital form and said processing circuit (20) comprises a digital/analogue converter (14) to convert said parameters to analogue form in order to be input to said cellular neural network.

19. System according to any of the previous claims, **characterised in that** said processing circuit (20) processes said signals corresponding to said images (I) by applying sets of parameters (templates) of the cellular neural network.


**Patentansprüche**

1. System, welches zum Ausführen einer automatischen Analyse von Bildern (I) von DNS-Microarrays nach Hybridisierung ausgelegt ist, wobei die Bilder (I) eine Matrix aus Punkten oder Flecken aufweisen, und das System dazu ausgelegt ist, mit einem Sensor (10) zum Erfassen der Bilder (I) verbunden zu werden, und eine Schaltung (20) zum Verarbeiten der den Bildern (I) entsprechenden, von dem Sensor (10) erzeugten Signale aufweist, **dadurch gekennzeichnet, dass** die verarbeitende Schaltung (20) gemäß einer zellulären neuronalen Netzarchitektur (CNN) zur parallelen Analogverarbeitung der Bildsignale aufgebaut ist.

2. System gemäß Anspruch 1, **dadurch gekennzeichnet, dass** der Sensor (10) zum Erfassen von Fluoreszenzbildern von DNS-Microarrays als Bilder (I) ausgeführt ist.

3. System gemäß einem der Ansprüche 1 oder 2, **dadurch gekennzeichnet, dass** die zelluläre neuronale Netzarchitektur eine Matrix aus Zellen (100) aufweist, welche lokal mittels synaptischer Verbindungen verschaltet sind, wobei diese Matrix eine räumliche Verteilung zeigt, welche im wesentlichen mit der Matrixgestalt der Bilder (I) korreliert.

4. System gemäß Anspruch 1, **dadurch gekennzeichnet, dass** der Sensor ein Matrixoptiksensor ist.

5. System gemäß einem der Ansprüche 1 oder 4, **dadurch gekennzeichnet, dass** der Sensor (10) ein Farboptiksensor ist.

6. System gemäß einem der Ansprüche 1, 4 oder 5, **dadurch gekennzeichnet, dass** der Sensor (10) ein optischer Sensor ist, welcher wahlweise empfindlich auf verschiedene Farbkomponenten (R, G, B) der Bilder (I) ist.

7. System gemäß Anspruch 6, **dadurch gekennzeichnet, dass** die verarbeitende Schaltung (20) zum Verarbeiten von Signalen ausgeführt ist, welche nur einigen (R, G) der verschiedenen Farbkomponenten (R, G, B) der Bilder (I) entsprechen.

8. System gemäß Anspruch 7, **dadurch gekennzeichnet, dass** die verarbeitende Schaltung (20) zum Verarbeiten von Signalen ausgeführt ist, welche nur bestimmten Farbkomponenten (R, G) der Bilder (I) zugehören mit Ausnahme der blauen Farbkomponente.

9. System gemäß einem der Ansprüche 6 bis 8, **dadurch gekennzeichnet, dass** die verarbeitende Schaltung (20) zum parallelen Verarbeiten der bestimmten Farbkomponenten (R, G) der Bilder (I) ausgeführt ist.

10. System gemäß einem der vorangehenden Ansprüche, **dadurch gekennzeichnet, dass** der Sensor (10) und die verarbeitende Schaltung (20) in einen einzigen Chip integriert sind.

11. System gemäß einem der Ansprüche 1 oder 10, **dadurch gekennzeichnet, dass** der Sensor (10) und/oder die verarbeitende Schaltung (20) VLSI CMOS-Technologien umsetzen.

12. System gemäß einem der vorangehenden Ansprüche, **dadurch gekennzeichnet, dass** die verarbeitende Schaltung (20) dazu ausgestattet ist, mit den den Bildern (I) entsprechenden Signalen mindestens eine der Operationen durchzuführen, welche aus der aus folgenden bestehenden Gruppe ausgewählt sind:

☐ Hintergrundlöschen (201, 301) der Bilder (I),
☐ Rasteranalyse (202, 302) der Bilder (I),
☐ Eliminierung kleinerer irregulärer Flecken (203, 303)
☐ Eliminierung der größeren Flecken (204, 304)
☐ Intensitätsanalyse (205, 305) und
☐ Schwellenwertdefinition (206, 306)

13. System gemäß einem der Ansprüche 6 bis 9, **dadurch gekennzeichnet, dass** die verarbeitende Schaltung (20) zum Kombinieren der in bezug auf verschiedene Farbkomponenten (R, G) der Bilder erhaltenen Verarbeitungsergebnisse (591, 592) ausgeführt ist.

14. System gemäß Anspruch 13, **dadurch gekennzeichnet, dass** die Kombinationsoperation ein logisches Produkt (UND - 40) ist.

15. System gemäß einem der vorangehenden Ansprüche, **dadurch gekennzeichnet, dass** die verarbeitende Schaltung (20) folgendes aufweist:

☐ mindesten einen analogen Speicher (11) zum Speichern von den Bildern (I) entsprechenden Signalen,
☐ eine Steuerlogik (13) zum Ausführen von Echtzeitbearbeitungssequenzen der Bilder.

16. System gemäß einem der Ansprüche 15 oder 16, **dadurch gekennzeichnet, dass** die Bilder und die Bearbeitungszwischenzustände von mindestens einem Analogspeicher (11) gespeichert werden.

17. System gemäß einem der Ansprüche 15 oder 16, **dadurch gekennzeichnet, dass** die verarbeitende Schaltung (20) Mittel (15) zum Speichern der Konfigurationsparameter des zellulären neuronalen Netzes aufweist.

**18.** System gemäß Anspruch 17, **dadurch gekennzeichnet, dass** die Konfigurationsparameter in digitaler Form gespeichert werden, und die verarbeitende Schaltung (20) einen Digital/Analog-Wandler (14) zum Umwandeln der Parameter in Analogform, um in das zelluläre neuronale Netz eingegeben zu werden, aufweist.

**19.** System gemäß einem der vorangehenden Ansprüche, **dadurch gekennzeichnet, dass** die verarbeitende Schaltung (20) die den Bildern entsprechenden Signale durch Anwenden von Parametersätzen (Vorlagen) des zellulären neuronalen Netzes verarbeitet.

**Revendications**

**1.** Système adapté pour réaliser une analyse automatique d'images (I) de puces à ADN après hybridation, lesdites images (I) comprenant une matrice de points, le système étant adapté pour être associé à un capteur (10) pour acquérir lesdites images (I) et comprenant un circuit (20) pour traiter les signaux correspondant auxdites images (I) générés par ledit capteur (10), **caractérisé en ce que** ledit circuit de traitement (20) est configuré selon une architecture de réseau neuronal cellulaire (CNN) pour le traitement analogique parallèle desdits signaux d'image.

**2.** Système selon la revendication 1, **caractérisé en ce que** ledit capteur (10) est configuré pour acquérir, en tant que lesdites images (I), des images fluorescentes à partir des puces à ADN.

**3.** Système selon l'une quelconque des revendications 1 ou 2, **caractérisé en ce que** ladite architecture de réseau neuronal cellulaire comprend une matrice de cellules (100) interconnectées localement au moyen de connexions synaptiques, ladite matrice présentant une distribution spatiale qui est essentiellement corrélée à la forme de la matrice desdites images (I).

**4.** Système selon la revendication 1, **caractérisé en ce que** ledit capteur (10) est un capteur optique de matrice.

**5.** Système selon l'une quelconque des revendications 1 ou 4, **caractérisé en ce que** ledit capteur (10) est un capteur optique de couleur.

**6.** Système selon l'une quelconque des revendications 1, 4 ou 5, **caractérisé en ce que** ledit capteur (10) est un capteur optique qui est sélectivement sensible à des composés chromatiques distincts (R, V, B) desdites images (I).

**7.** Système selon la revendication 6, **caractérisé en ce que** ledit circuit de traitement (20) est configuré pour traiter les signaux correspondant uniquement à certains (R, V) desdits composants chromatiques distincts (R, V, B) desdites images (1).

**8.** Système selon la revendication 7, **caractérisé en ce que** ledit circuit de traitement (20) est configuré pour traiter des signaux associés uniquement aux composants chromatiques distincts (R, V) desdites images (I) à l'exclusion du composant chromatique bleu (B).

**9.** Système selon l'une quelconque des revendications 6 à 8, **caractérisé en ce que** ledit circuit de traitement (20) est configuré pour traiter les signaux correspondant auxdits composants chromatiques distincts (R, V) desdites images (I) en parallèle.

**10.** Système selon l'une quelconque des revendications précédentes, **caractérisé en ce que** ledit capteur (10) et ledit circuit de traitement (20) sont intégrés dans une puce unique.

**11.** Système selon l'une quelconque des revendications 1 ou 10, **caractérisé en ce que** ledit capteur (10) et/ou ledit circuit de traitement (20) mettent en oeuvre des technologies CMOS VLSI (intégration à très grande échelle).

**12.** Système selon l'une quelconque des revendications précédentes, **caractérisé en ce que** ledit circuit de traitement (20) est configuré pour réaliser sur lesdits signaux correspondant auxdites images (I) au moins l'une des opérations choisies dans le groupe constitué par :

  - un éclaircissement du fond (201, 301) desdites images (I),
  - une analyse de grilles (202, 302) desdites images (I),
  - une élimination des points irréguliers plus petits (203, 303),

- une élimination des points plus grands (204, 304),
- une analyse d'intensité (205, 305) et
- une définition de seuil (206, 306).

**13.** Système selon l'une quelconque des revendications 6 à 9, **caractérisé en ce que** ledit circuit de traitement (20) est configuré pour combiner les résultats de traitement (591, 592) obtenus en rapport avec des composants chromatiques distincts (R, V) desdites images.

**14.** Système selon la revendication 13, **caractérisé en ce que** ladite opération de combinaison est un produit logique (ET-40).

**15.** Système selon l'une quelconque des revendications précédentes, **caractérisé en ce que** ledit circuit de traitement (20) comprend :

- au moins une mémoire analogique (11) pour stocker des signaux correspondant auxdites images (I) et
- une logique de commande (13) pour réaliser des séquences de traitement en temps réel desdites images.

**16.** Système selon la revendication 15, **caractérisé en ce que** lesdites images et les stades de traitement intermédiaires sont stockés par au moins une mémoire analogique (11).

**17.** Système selon l'une quelconque des revendications 15 ou 16, **caractérisé en ce que** ledit circuit de traitement (20) comprend des moyens (15) pour stocker les paramètres de configuration dudit réseau neuronal cellulaire.

**18.** Système selon la revendication 17, **caractérisé en ce que** lesdits paramètres de configuration sont stockés sous forme numérique et ledit circuit de traitement (20) comprend un convertisseur numérique/analogique (14) pour convertir lesdits paramètres à la forme analogique afin qu'ils soient entrés dans ledit réseau neuronal cellulaire.

**19.** Système selon l'une quelconque des revendications précédentes, **caractérisé en ce que** ledit circuit de traitement (20)' traite lesdits signaux correspondant auxdites images (I) en appliquant des jeux de paramètres (modèles) du réseau neuronal cellulaire.

## Fig_1

## Fig_3

I

10

R          G

## Fig_5

$h(x)$

$x$

## Fig_4

100

100

100

$C_{i-1,j}$  $C_{i,j}$
$C_{i,j-1}$  $C_{i,j}$  $C_{i,j+1}$
$C_{i-1,j}$

100

Input                                State  $V_{x_{ij}}$      Output

$V_{U_{ij}}$   $\hat{A}(ij;kl)Iy_{kl}$   $B(ij;kl)V_{U_{kl}}$   $I_{ij}$   $C$  $R$   VCCS   $Iy_{ij}=h(V_{x_{ij}})$

## Fig_2

11

15

16

20

14

10

13

12

# Fig _6

# Fig _7

Fig_8a

Fig_8b

Fig_9

Fig_10

Fig_11

Fig_12